# EUROPÄISCHE PATENTSCHRIFT

(11) **EP 0 822 360 B1**
(45) Veröffentlichungstag und Bekanntmachung des Hinweises auf die Patenterteilung: **28.11.2001**
(21) Anmeldenummer: 97116997.4
(22) Anmeldetag: 31.10.1994
(51) Int. Cl.: F16K 11/10

(54) **Schaltelement zur Verwendung in einer Ventilkombination**
Switch valve to be used in a valve combination
Soupape de commutation pour utilisation dans un combinaison de soupapes

(30) Priorität: 16.11.1993 DE 4339165
(43) Veröffentlichungstag der Anmeldung: 04.02.1998
(62) Teilanmeldung aus: 94117198.5
(73) Patentinhaber: Bürkert Werke GmbH & Co., D-74653 Ingelfingen (DE)
(72) Erfinder: Pieloth, Manfred, 01069 Dresden-Mitte (DE); Töpfer, Heinz, Prof. Dr., 01277 Dresden (DE); Schrepel, August, Dr., 01468 Friedwald (DE)
(74) Vertreter: Degwert, Hartmut, Dipl.-Phys.

(56) Entgegenhaltungen:
- FR-A- 2 343 183
- FR-A- 2 522 085
- US-A- 3 592 227

## Beschreibung

Die Erfindung betrifft ein Schaltelement aus zwei in einem gemeinsamen Ventilgehäuse angeordneten Doppelmembranventilen, die jeweils so aufgebaut sind, daß in dem Ventilgehäuse zwei durch einen Kanal verbundene Dichtsitze mit ihren Dichtflächen voneinander fortweisend angeordnet sind und den Dichtsitzen zwei starr miteinander gekoppelte Schließkörper zugeordnet sind, von denen jeweils der eine den zugeordneten Dichtsitz schließt, während der andere den zugeordneten Dichtsitz öffnet. Ein Schaltelement mit diesen Merkmalen ist aus der FR-A- 2 343183 bekannt.

Ventile werden in verschiedenen Größen für verschiedene Durchflüsse und Druckbereiche angeboten. Üblicherweise wird für jeden Anwendungsfall ein Ventil mit passenden Kenndaten für Durchfluß, Druckbereich, Ansteuerleistung usw. ausgewählt. Die Anbieter von Ventilen müssen daher ein großes Sortiment für alle gängigen Anwendungen bereithalten.

Um einen großen Durchfluß mit einer geringen Steuerleistung schalten zu können, werden vorgesteuerte Ventile verwendet. Bei herkömmlichen vorgesteuerten Ventilen ist das Vorsteuerventil in die Konstruktion integriert. Auch bei vorgesteuerten Ventilen sind daher für verschieden Kenndaten verschiedene Baugrößen und Konstruktionen erforderlich.

Die Erfindung schlägt ein Schaltelement gemäß des Patentanspruchs 1 vor, das in Kombination mit einem Vorsteuerventil und einem Durchflußverstärker ein breites Spektrum von Ventilkenndaten abdecken kann.

Ein Doppelmembranventil dieser Bauart ist an sich aus der DD 49 565 bekannt, wird dort jedoch lediglich als pneumatisches logisches Schaltglied beschrieben. Durch Anwendung dieser Bauform auf das erfindungsgemäße Schaltelement, das z.B. in einer Ventilkombination gemäß der EP 0653682 eingesetzt werden kann, sind eine hohe Zuverlässigkeit, kurze Schaltzeiten, hohe Schalthäufigkeit und große Standfestigkeit bei verschiedenen Medien erzielbar.

Weitere Merkmale und Vorteile der Erfindung ergeben sich aus der folgenden Beschreibung und aus der Zeichnung, auf die Bezug genommen wird. In der Zeichnung zeigen:
Fig. 1 einen schematische Schnittansicht eines Vorsteuerventils;
Fig. 2 einen schematische Schnittansicht eines Durchflußverstärkers;
Fig. 3 eine schematische Schnittansicht eines Schaltelements;
Fig. 4 eine Schnittansicht des Schaltelements senkrecht zur Schnittebene der Fig. 3;
Fig. 5 eine erste Ventilkombination, die aus einem Durchflußverstärker und einem Schaltelement besteht;
Fig. 6 eine zweite Ventilkombination, die aus einem Vorsteuerventil und einem Schaltelement besteht; und
Fig. 7 eine Ventilkombination aus Vorsteuerventil, Durchflußverstärker und Schaltelement.

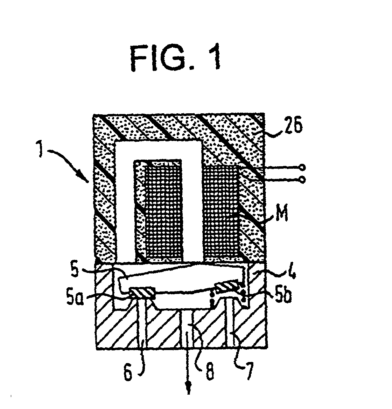

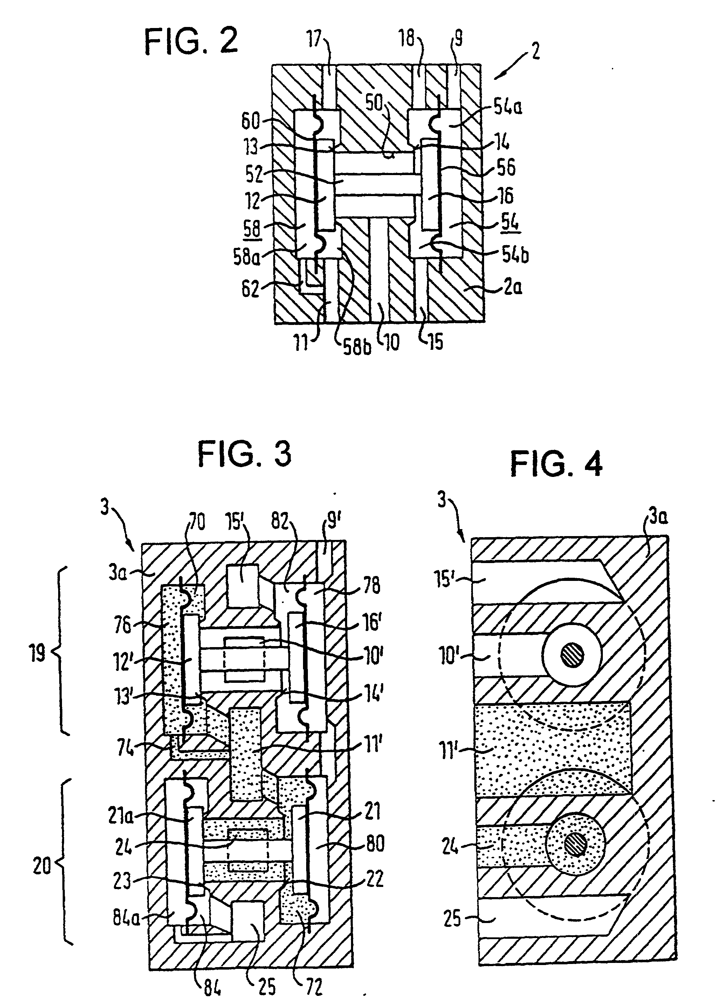

Die folgende Beschreibung des in Fig. 1 gezeigten Vorsteuerventils 1 sowie des in Fig. 2 gezeigten Durchflußverstärkers 2 dient nur der Beschreibung der Wirkungsweise des erfindungsgemäßen Schaltelements 3. Sowohl das Vorsteuerventil 1 als auch der Durchflußverstärker 2 sind nicht Gegenstand der Erfindung.

Das in Fig. 1 gezeigte Vorsteuerventil 1 ist ein Kleinventil mit einer in einem Gehäuseteil 4 schwenkbar gelagerten Schaltwippe 5, die alternativ den einen oder anderen von zwei Medienanschlüssen 6 und 7 öffnet. In die im Inneren des Gahäuseteils 4 gebildete Ventilkammer mündet unmittelbar ein ungesteuerter Ausgangsanschluß 8. Die Schaltwippe 5 trägt zwei Schließkörper 5a und 5b, die mit zugeordneten Dichtsitzen zusammenwirken, welche an den Mündungsöffnungen der Medienanschlüsse 6 und 7 im Inneren des Gehäuseteils 4 gebildet sind. Die Schaltwippe 5 wird durch einen Elektromagnet M betätigt, der auf die offene Seite des Gehäuseteils 4 aufgesetzt und mit einer Umspritzung 26 versehen ist. Durch eine Druckfeder wird der Schließkörper 5b bei unbetätigtem Elektromagnet M von dem entsprechenden Dichtsitz abgehoben und zugleich der Schließkörper 5a gegen den zugeordneten Dichtsitz angedrückt. Bei erregtem Elektromagnet M wird entgegen der Kraft dieser Druckfeder der Schließkörper 5b gegen den entsprechenden Dichtsitz gedrückt, und der Schließkörper 5a wird von dem entsprechenden Dichtsitz angehoben.

Der in Fig. 2 gezeigte Durchflußverstärker 2 besteht aus einem quaderförmigen Ventilgehäuse 2a, in dessen Innerem ein Doppelmembranventil ausgebildet ist. In dem Ventilgehäuse 2a sind zwei durch einen Kanal 50 miteinander verbundene Dichtsitze 13, 14 mit ihren Dichtflächen voneinander fortweisend angeordnet. Diesen Dichtsitzen 13, 14 sind zwei durch einen Stift 52 starr miteinander verbundene Schließkörper 12, 16 zugeordnet, von denen jeweils der eine den zugeordneten Dichtsitz schließt, während der andere den zugeordneten Dichtsitz öffnet. Der Schließkörper 16 ist in einer ersten Ventilkammer 54 angeordnet und an einer Membran 56 eingespannt, welche die Ventilkammer 54 in zwei Ventilkammerabschnitte 54a und 54b unterteilt. In gleicher Weise ist der Schließkörper 12 in einer Ventilkammer 58 angeordnet und an einer Membran 60 eingespannt, welche die Ventilkammer 58 in zwei Ventilkammerabschnitte 58a und 58b unterteilt. Der Kanal 50 ist mit einem Ausgangsanschluß 10 verbunden. Der Ventilkammerabschnitt 54a ist mit einem Eingangsanschluß 9 für den zu verstärkenden Medienstrom verbunden. Aus dem Ventilkammerabschnitt 54b sind zwei Rückflußanschlüsse 15, 18 herausgeführt. Aus dem Ventilkammerabschnitt 58b sind zwei Medienanschlüsse 11, 17 für einen zu schaltenden Medienstrom herausgeführt, wobei der Medienanschluß 11 ferner über einen abgezweigten Kanal 62 mit dem Ventilkammerabschnitt 58a verbunden ist.

Die Fig. 3 und 4 schließlich zeigen das erfindungsgemäße Schaltelement 3, welches aus zwei im Innerern eines quaderförmigen Gehäuses 3a angeordneten Doppelmembranventilen 19 und 20 aufgebaut ist. Das Doppelmembranventil 19 umfaßt die beiden jeweils an einer Membran eingespannten und starr miteinander verbundenen Schließkörper 12' und 16'. Das Doppelmembranventil 20 umfaßt die beiden jeweils an einer Membran eingespannten und starr miteinander verbundenen Schließkörper 21 und 21a, die mit Dichtsitzen 22 bzw. 23 zusammenwirken. Der zwischen den beiden Schließkörpern 12' und 16' gebildete Kanal ist mit einem ersten Ausgangsanschluß 10' verbunden; der zwischen den Schließkörpern 21 und 21a gebildete Kanal ist mit einem zweiten Ausgangsanschluß 24 verbunden. Etwa in der Mitte des Ventilgehäuses 3a ist eine Verteilerkammer 11' gebildet, die zugleich einen Anschluß für das zu schaltende Medium bildet. Diese Verteilerkammer 11' ist mit zwei einander gegenüberliegenden, innenseitigen Ventilkammerabschnitten 70 und 72 der Doppelmembranventile 19, 20 verbunden. Über einen abgezweigten Kanal 74 ist auch der dem Ventilkammerabschnitt 70 gegenüberliegende Ventilkammerabschnitt 76 mit der Verteilerkammer 11' verbunden. Die beiden außenseitigen, einander benachbart liegenden Ventilkammerabschnitte 78 und 80 der Doppelmembranventile 19, 20 sind miteinander und mit einem Ansteueranschluß 9' für einen ansteuernden Medienstrom verbunden. Der dem Ventilkammerabschnitt 78 gegenüberliegende Ventilkammerabschnitt 82 ist mit einem aus dem Ventilgehäuse 3a herausgeführten Rückflußanschluß 15' verbunden. Mit einem weiteren Rückflußanschluß 25 ist der dem Dichtsitz 23 benachbarte Ventilkammerabschnitt 84 und der Ventilkammerabschnitt 84a verbunden.

Im folgenden wird die Wirkungsweise des Schaltelements 3 beschrieben.

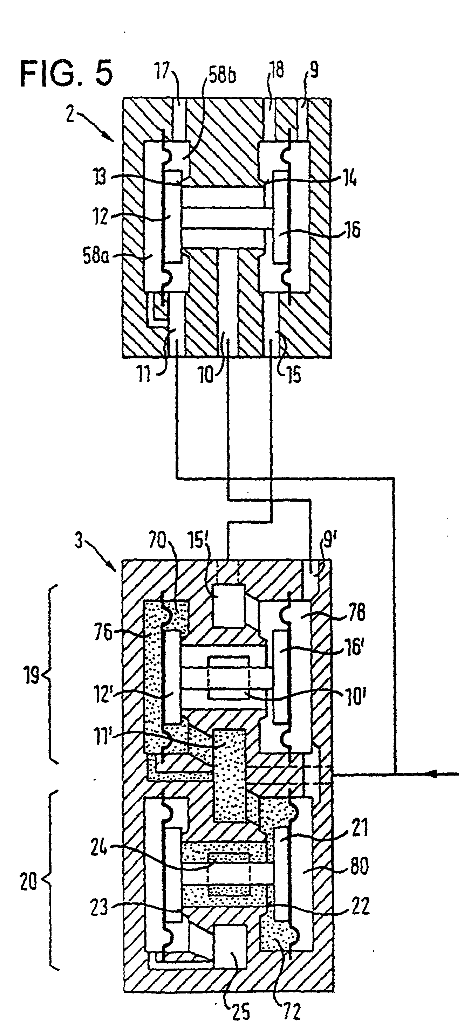

Bei der in Fig. 5 gezeigten Ventilkombination ist der Ausgangsanschluß 10 des Durchflußverstärkers 2 mit dem Ansteueranschluß 9' des erfindungsgemäßen Schaltelements verbunden. Ferner ist der Rückflußanschluß 15 des Durchflußverstärkers 2 mit dem Rückflußanschluß 15' bzw. 25 des Schaltelements 3 verbunden. Schließlich ist die Verteilerkammer 11' des Schaltelements 3 mit dem Medienanschluß 11 des Durchflußverstärkers 2 verbunden. Dem Anschluß 9 des Durchflußverstärkers 2 wird ein schwacher Medienstrom zugeführt, der durch den Durchflußverstärker verstärkt und dem Ansteueranschluß 9' des Schaltelements 3 zugeführt wird.

Bei dem in Fig. 5 gezeigten Schaltzustand beaufschlagt das der Verteilerkammer 11' zugeführte Medium beide Ventilkammerabschnitte 70 und 76 des Doppelmembranventils 19, welches als Durchflußverstärker wirkt. Zugleich wird der Ventilkammerabschnitt 72 des Doppelmembranventils 20 beaufschlagt. Solange kein Druck über den Ansteueranschluß 9' zugeführt wird, wird der Schließkörper 12' gegen seinen Dichtsitz angedrückt; zugleich wird aber der Schließkörper 21 von dem Dichtsitz 22 abgehoben, so daß ein großer Medienstrom von der Verteilerkammer 11' zu dem ersten Auslaß 24 gelangt. Wenn dem Ansteueranschluß 9' des Schaltelements 3 ein durch den Durchflußverstärker 2 verstärkter Medienstrom zugeführt wird, nimmt der Druck in den Ventilkammerabschnitten 78, 80 gleichzeitig zu und beide Doppelmembranventile 19, 20 schalten um. Der Schließkörper 12' gibt nun den zugehörenden Dichtsitz frei, während der Schließkörper 21 gegen den Dichtsitz 22 gedrückt wird. Folglich wird die Verbindung zwischen der Verteilerkammer 11' und dem Ausgangsanschluß 24 geschlossen sowie zwischen der Verteilerkammer 11' und dem anderen Ausgangsanschluß 10' geöffnet. Folglich wird der relativ große Medienstrom, welcher der Verteilerkammer 11' zugeführt wird, je nach Schaltzustand des Schaltelements 3 dem Ausgangsanschluß 24 oder 10' zugeführt.

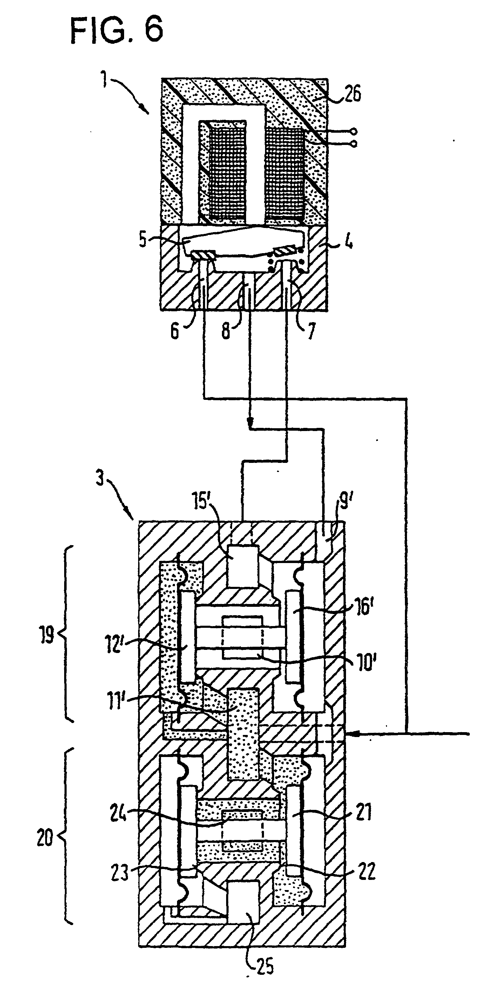

Wie schließlich in Fig.6 gezeigt ist, kann das erfindungsgemäße Schaltelement 3 auch unmittelbar durch das Vorsteuerventil 1 angesteuert werden. Der Ausgangsanschluß 8 des Vorsteuerventils wird bei dieser Ventilkombination mit dem Ansteueranschluß 9' des Schaltelements 3 verbunden. Der eine Medienanschluß 6 wird mit der Verteilerkammer 11' verbunden; der zweite Medienanschluß 2 des Vorsteuerventils 1 wird mit dem Rückflußanschluß 15' bzw. 25 des Schaltelements verbunden.

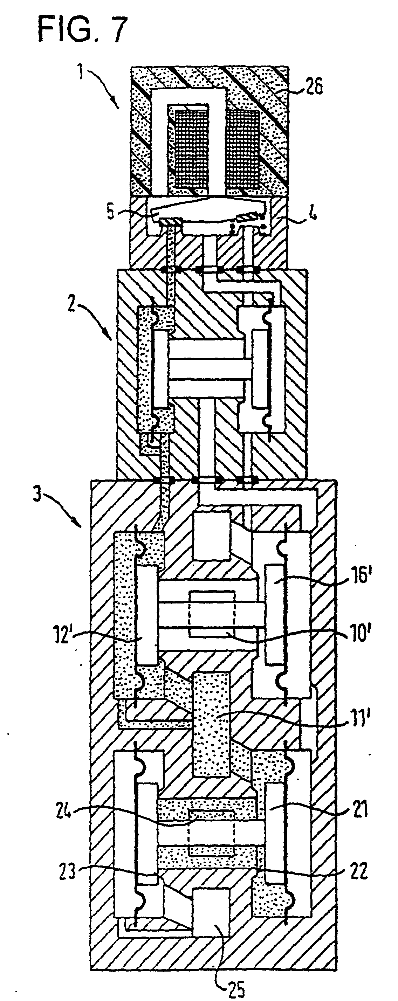

Die Fig. 7 schließlich zeigt, wie eine Kombination aus Vorsteuerventil 1, Durchflußverstärker 2 und Schaltelement 3 aufgegeben wird, indem diese Moduln einfach aneinandergefügt werden, wobei die Strömungsverbindungen durch korrespondierende Öffnungen in den aneinandergefügten Gehäuseflächen hergestellt werden.

## Patentansprüche

1. Schaltelement (3) aus zwei in einem gemeinsamen Ventilgehäuse (3a) angeordneten Doppelmembranventilen (19, 20), die jeweils so aufgebaut sind, daß in dem Ventilgehäuse (3a) zwei durch einen Kanal verbundene Dichtsitze (22, 23 bzw. 13', 14') mit ihren Dichtflächen voneinander fortweisend angeordnet sind, und den Dichtsitzen (22, 23 bzw. 13', 14') zwei starr miteinander gekoppelte Schließkörper (21, 21a, bzw. 12', 16') zugeordnet sind, von denen jeweils der eine den zugeordneten Dichtsitz schließt, während der andere den zugeordneten Dichtsitz öffnet, **dadurch gekennzeichnet, daß** jeder Schließkörper (12', 16', bzw. 21, 21a) in einer Ventilkammer angeordnet und an einer Membran eingespannt ist, welche diese Ventilkammer in zwei Abschnitte unterteilt;
wobei:
a) zwei einander zugewandte Ventilkammerabschnitte (70, 72) der beiden Doppelmembranventile (19, 20) und der Ventilkammerabschnitt (76) des einen Doppelmembranventils (19) mit einer zwischen ihnen liegenden, in dem Ventilgehäuse (3a) gebildeten Verteilerkammer (11') verbunden sind, die mit einem zu schaltenden Medienstrom beaufschlagbar ist;
b) zwei benachbarte, jeweils von dem Kanal abgewandte Ventilkammerabschnitte (78, 80) der beiden Doppelmembranventile (19, 20) miteinander sowie mit einem Ansteuereingang (9') verbunden und durch einen ansteuernden Medienstrom beaufschlagbar sind;
und
c) die Kanäle der beiden Doppelmembranventile (19, 20) zwei Ausgänge (10', 24) bilden, zu denen der zu schaltende Medienstrom selektiv durchschaltbar ist.

2. Schaltelement nach Anspruch 1, **dadurch gekennzeichnet, daß** zwei weitere einander zugewandte Ventilkammerabschnitte (82, 84) der beiden Doppelmembranventile (19, 20) und der Ventilkammerabschnitt (84a) des anderen Doppelmembranventils (20) jeweils mit einem Rückflußanschluß (15', bzw. 25) des Schaltelements (3) verbunden sind.

## Claims

1. A switching element (3) made up of two double-diaphragm valves (19, 20) which are disposed in a common valve housing (3a) and which are each structured such that disposed in the valve housing (3a) are two sealing seats (22, 23 and 13', 14', respectively) connected by a duct, with their sealing faces pointing away from one another, and associated with the sealing seats (22, 23 and 13', 14', respectively) are two closing elements (21, 21a and 12', 16', respectively) which are rigidly coupled with one another, of which the one closes its associated sealing seat, while the respective other one opens its associated sealing seat, **characterized in that** each closing element (12', 16' and 21, 21a, respectively) is disposed in a valve chamber and mounted at a diaphragm which divides this valve chamber into two portions;
wherein:
(a) two valve chamber portions (70, 72), faced towards one another, of the two double-diaphragm valves (19, 20) and the valve chamber portion (76) of the one double-diaphragm valve (19) are connected to a distribution chamber (11') which lies between them and is formed in the valve housing (3a) and which can be impinged by a media stream to be switched;
(b) two adjacent valve chamber portions (78, 80), which are each faced away from the duct, of the two double-diaphragm valves (19, 20) are connected to one another and also to a control input (9') and can be impinged by a controlling media stream;
and
(c) the ducts of the two double-diaphragm valves (19, 20) form two outputs (10', 24), to which the media stream to be switched can be selectively connected.

2. The switching element according to claim 1, **characterized in that** two further valve chamber portions (82, 84), faced towards one another, of the two double-diaphragm valves (19, 20) and the valve chamber portion (84a) of the other double-diaphragm valve (20) are each connected to a backflow connection (15' and 25, respectively) of the switching element (3).

## Revendications

1. Elément de commutation (3) constitué de deux soupapes à double diaphragme (19, 20) agencées dans un boîtier de soupape (3a) commun, lesquelles sont chacune conçues de manière telle que dans le boîtier de soupape (3a) sont agencés deux sièges d'étanchéité (22, 23 ; 13', 14') reliés par un canal et détournés l'un de l'autre par leurs surfaces d'étanchéité, et qu'aux sièges d'étanchéité (22, 23 ; 13', 14') sont associés respectivement deux corps de fermeture (21, 21a ; 12', 16') accouplés rigidement l'un à l'autre, dont l'un ferme le siège d'étanchéité associé tandis que l'autre ouvre le siège d'étanchéité associé, **caractérisé en ce que** chaque corps de fermeture (12', 16' ; 21, 21a) est agencé dans une chambre de soupape et fixé à un diaphragme qui divise cette chambre de soupape en deux portions ;
a) deux portions de chambre de soupape (70, 72) tournées l'une vers l'autre des deux soupapes à double diaphragme (19, 20) et la portion de chambre de soupape (76) de ladite une soupape à double diaphragme (19) étant reliées à une chambre de distribution (11') située entre elles et formée dans le boîtier de soupape (3a), ladite chambre de distribution pouvant être alimentée avec un courant de fluide ;
b) deux portions de chambre de soupape (78, 80) voisines, détournées chacune du canal, des deux soupapes à double diaphragme (19, 20), étant reliées l'une à l'autre ainsi qu'à une entrée de commande (9') et pouvant être alimentées par un courant de fluide de commande ; et
c) les canaux des deux soupapes à double diaphragme (19, 20) formant deux sorties (10', 24) vers lesquelles on peut diriger de manière sélective le courant de fluide à commuter.

2. Elément de commutation selon la revendication 1, **caractérisé en ce que** deux autres portions de chambre de soupape (82, 84) tournées l'une vers l'autre, des deux soupapes à double diaphragme (19, 20) et la portion de chambre de soupape (8a) de l'autre soupape à double diaphragme (20) sont chacune reliées à un raccord de refoulement (15'; 25) de l'élément de commutation (3).
